# EUROPÄISCHE PATENTSCHRIFT

(11) **EP 0 947 724 B1**
(45) Veröffentlichungstag und Bekanntmachung des Hinweises auf die Patenterteilung: **02.07.2003**
(21) Anmeldenummer: 98123682.1
(22) Anmeldetag: 11.12.1998
(51) Int. Cl.: F16D 65/16, F16D 65/40, B60T 13/74

(54) **Elektromechanische Radbremsvorrichtung**
Electro-mechanical wheel brake device
Dispositif de frein de roue électromécanique

(30) Priorität: 02.04.1998 DE 19814787
(43) Veröffentlichungstag der Anmeldung: 06.10.1999
(73) Patentinhaber: ROBERT BOSCH GMBH, 70442 Stuttgart (DE)
(72) Erfinder: Schumann, Frank, 74357 Boennigheim (DE)

(56) Entgegenhaltungen:
- WO-A-97/30294
- DE-A- 4 428 092
- DE-A- 19 536 694
- US-A- 5 026 178
- US-A- 5 130 650
- SCHMIDT K ET AL: "EINSATZ VON SENSORLAGERN IN DER INDUSTRIEAUTOMATISIERUNG" VDI Z, VDI VERLAG GMBH. DUSSELDORF, DE, 1. April 1997 (1997-04-01), Seiten 88-90, XP000659771 ISSN: 0042-1766

## Beschreibung

### Stand der Technik

Die Erfindung betrifft eine elektromechanische Radbremsvorrichtung mit den Merkmalen des Oberbegriffs des Anspruchs 1.

Eine derartige Radbremsvorrichtung ist bekannt aus der DE 195 11 287 A1. Die bekannte Radbremsvorrichtung ist als Scheibenbremsvorrichtung mit einem Schwimmsattel ausgebildet. Als Betätigungseinrichtung zum Andrücken eines Reibbremsbelags an eine einen Bremskörper bildende Bremsscheibe weist die bekannte Radbremsvorrichtung ein Schraubgetriebe in Form eines Rollengewindetriebs auf, das von einem Elektromotor angetrieben wird. Durch rotierenden Antrieb des Schraubgetriebes wird der Reibbremsbelag zur Erzeugung einer Bremskraft gegen den Bremskörper gedrückt und zur Beendigung einer Bremsung wieder vom Bremskörper abgehoben.

Zur Positionierung des Schraubgetriebes weist die bekannte Radbremsvorrichtung einen kontaktlosen Meßwert- bzw. Winkelgeber, einen sog. Resolver auf. Der Resolver besteht aus zwei koaxial zueinander angeordneten, durch einen Luftspalt voneinander getrennten Ringen, die elektrische Wicklungen zur Erzeugung und Messung elektrischer, von der Drehung der beiden Ringe gegeneinander abhängiger Signale tragen. Einer der beiden Ringe ist fest mit einer Mutter des Schraubgetriebes verbunden, dreht also mit der Mutter mit, wogegen der andere Ring drehfest in einem Gehäuse angebracht ist.

### Vorteile der Erfindung

Die erfindungsgemäße Radbremsvorrichtung mit den Merkmalen des Anspruchs 1 weist ein Sensorlager auf, mit dem ein bei Betätigung der Radbremsvorrichtung drehendes Teil gelagert ist. Das drehende Teil kann beispielsweise eine Motorwelle des Elektromotors oder eine Mutter oder Spindel eines Schraubgetriebes der Betätigungseinrichtung sein. Das Sensorlager ermöglicht die Erfassung der Drehung des drehenden Teils, und zwar sowohl die Erfassung von vollen Umdrehungen als auch die Erfassung von Bruchteilen einer vollen Umdrehung. Da eine Bewegung des Reibbremsbelags zum Bremskörper oder von diesem weg sowie eine Andruckkraft des Reibbremsbelags an den Bremskörper von der Drehung des drehenden Teils der Betätigungseinrichtung abhängig ist, läßt sich mittels des Sensorlagers der Reibbremsbelag in Bezug auf den Bremskörper positionieren sowie die Andruckkraft des Reibbremsbelags an den Bremskörper und damit die Bremskraft bzw. ein Bremsmoment einstellen. Insbesondere ist eine Lüftspieleinstellung, also ein Abstand des Reibbremsbelags vom Bremskörper nach Beendigung einer Bremsung mittels des Sensorlagers möglich und beabsichtigt. Abhängig von der Ausbildung des Sensorlagers ist eine Drehrichtungserfassung möglich.

Das Sensorlager stellt die Integration eines Drehsensors in ein Lager dar. Die erfindungsgemäße Verwendung eines Sensorlagers hat den Vorteil der Reduktion der Gesamtzahl der Teile, einer vereinfachten Montage und verringertes Gewicht. Das Sensorlager ermöglicht eine kompakte Konstruktion und verringert dadurch den Raumbedarf, was für eine elektromechanische Radbremsvorrichtung aufgrund des begrenzten, zur Verfügung stehenden Bauraums von besonderem Vorteil ist. Hinzu kommen verringerte Kosten sowie eine größere Zuverlässigkeit des Systems.

Die Unteransprüche haben vorteilhafte Ausgestaltungen und Weiterbildungen der im Anspruch 1 angegebenen Erfindung zum Gegenstand.

Gemäß Anspruch 5 weist die erfindungsgemäße Radbremsvorrichtung einen permanent magnetisierten Impulsring auf. Der Impulsring bildet einen Signalgeber, dessen Signal von einem Signalempfänger, z. B. einem Hallsensor, berührungslos empfangen wird. Der Impulsring ist vorzugsweise drehfest mit dem bei Betätigung der Radbremsvorrichtung drehenden Teil, d.h. der Impulsring dreht sich bei Betätigung der Radbremsvorrichtung. Die permanente Magnetisierung hat den Vorteil, daß keine Energiezufuhr zu einem drehenden Teil zur Drehzahl- oder Drehwinkelmessung erforderlich ist. Anstelle des permanent magnetisierten Impulsrings kommen auch nicht-magnetisierte Impulsringe, beispielsweise ein Zahnring, in Betracht, wie sie beispielsweise von Raddrehsensoren für blockierschutzgeregelte Fahrzeugbremsanlagen her bekannt sind.

### Zeichnung

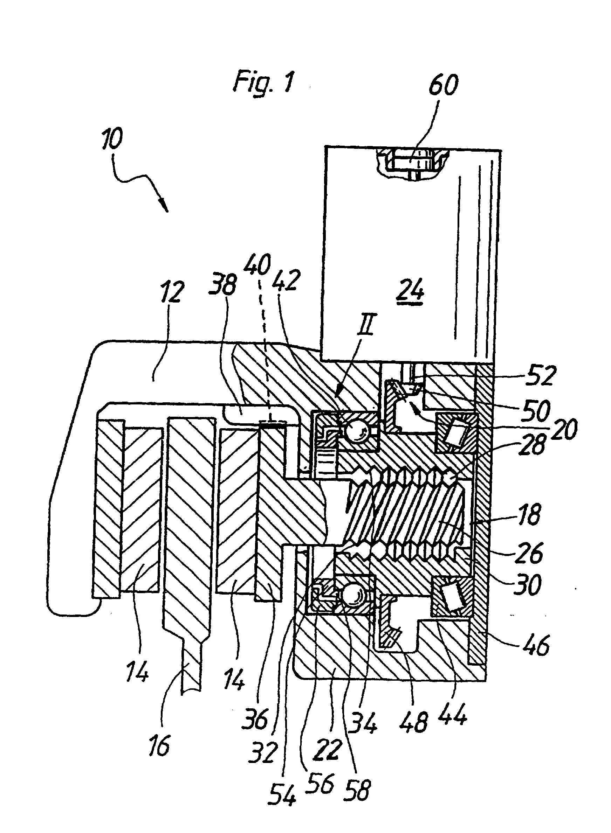

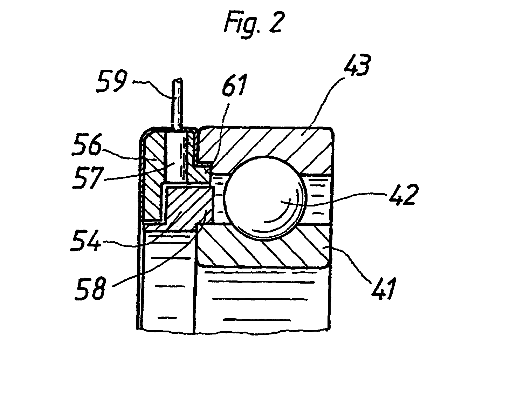

Die Erfindung wird nachfolgend anhand eines in der Zeichnung dargestellten Ausführungsbeispiels näher erläutert. Es zeigen Figur 1 eine schematisierte und vereinfachte Schnittdarstellung einer erfindungsgemäßen Radbremsvorrichtung und Figur 2 eine vergrößerte Einzelheit gemäß Pfeil II in Figur 1.

### Beschreibung des Ausführungsbeispiels

Die in Figur 1 dargestellte, erfindungsgemäße Radbremsvorrichtung 10 ist als Scheibenbremse mit einem sog. Schwimmsattel als Bremssattel 12 ausgebildet. Im Bremssattel 12 sind zwei Reibbremsbeläge 14 beiderseits einer zwischen ihnen rotierbaren Bremsscheibe 16 angeordnet, die drehfest mit einem nicht dargestellten Fahrzeugrad verbunden ist. Als Betätigungseinrichtung zum Andrücken der beiden Reibbremsbeläge 14 an die Bremsscheibe 16 weist die erfindungsgemäße Radbremsvorrichtung 10 ein Rotations-/Translations-Umsetzungsgetriebe in Form eines Schraubgetriebes 18 sowie ein Kegelradgetriebe 20 zum Antrieb des Schraubgetriebes 18 auf. Das Schraubgetriebe 18 und das Kegelradgetriebe 20 sind in einem Getriebegehäuse 22 untergebracht, das mit dem Bremssattel 12 einstückig ist. Zum Antrieb des Kegelradgetriebes 20 dient ein Elektromotor 24, der mit seiner Achse parallel zur Bremsscheibe 16 und mit seitlichem Abstand zur Bremsscheibe 16 am Getriebegehäuse 22 angeflanscht ist.

Das Schraubgetriebe ist als Rollengewindetrieb 18 mit einer Spindel 26, Gewinderollen 28 und einer Mutter 30 ausgebildet. Die Mutter 30 ist konzentrisch zur Spindel 26 die Spindel 26 am Umfang umschließend angeordnet. Die Mutter 30 steht nicht unmittelbar mit der Spindel 26 in Eingriff, sondern über die Gewinderollen 28, die in einem ringförmigen Zwischenraum zwischen Spindel 26 und Mutter 30 angeordnet sind und die sowohl mit einem Spindelgewinde 32 als auch mit einem Muttemgewinde 34 in Eingriff stehen. Im dargestellten Ausführungsbeispiel weisen die Gewinderollen 28 keine Gewindesteigung auf, d. h. ihre Gewindesteigung ist Null. Es handelt sich also genaugenommen nicht um Gewinderollen 28, sondern um Rollen mit einer umlaufenden Profilierung, die eine zum Spindelgewinde 32 und zum Muttemgewinde 34 komplementär Kontur aufweist. Abweichend vom dargestellten Ausführungsbeispiel können auch eine Gewindesteigung aufweisende Gewinderollen 28 Verwendung finden.

Durch rotierenden Antrieb der Mutter 30 werden die Gewinderollen 28 zu einer umlaufenden Bewegung um die Spindel 26 herum angetrieben, wobei die Gewinderollen 28 zugleich auf der Spindel 26 abwälzen und sich dadurch um ihre eigenen Achsen drehen. Die Umlaufbewegung der Gewinderollen 28 um die Spindel 26 herum und die gleichzeitige Rotation der Gewinderollen 28 um ihre eigenen Achsen bei rotierendem Antrieb der Mutter 30 ist der Umlaufbewegung von Planetenrädem eines Planetengetriebes vergleichbar. Aufgrund der Steigung des Spindelgewindes 32 und ggf. des Mutterngewindes 34 wird eine Rotation der Mutter 30 über die umlaufenden Gewinderollen 28 in eine Translation der Spindel 26 umgesetzt. Die Spindel 26 ist einstückig mit einer Bremsbelagplatte 36, auf der einer der beiden Reibbremsbeläge 14 angebracht ist. Durch rotierenden Antrieb der Mutter 30 läßt sich somit der eine, in der Zeichnung rechts dargestellte, Reibbremsbelag 14 gegen eine Seite der Bremsscheibe 16 drücken. Aufgrund einer Reaktionskraft wird der andere Reibbremsbelag 14 über den als Schwimmsattel ausgebildeten Bremssattel 12 in an sich bekannter Weise gegen die andere Seite der Bremsscheibe 16 gedrückt, so daß eine Bremskraft bzw. ein Bremsmoment auf die Bremsscheibe 16 ausgeübt wird.

Zur Verdrehsicherung der Spindel 26 weist der Bremssattel 12 eine Drehsicherungsrippe 38 auf, die in eine Nut 40 am Rand der Bremsbelagplatte 36 eingreift.

Die Mutter 30 ist mit einem Radialkugellager 42 drehbar im Getriebegehäuse 22 gelagert und stützt sich über ein Axialrollenlager 44 gegen einen Gehäusedeckel 46 ab, der mit nicht dargestellten Schrauben mit dem Getriebegehäuse 22 verschraubt ist.

Auf die Mutter 30 ist ein Tellerrad 48 drehfest aufgepreßt, mit dem ein Kegelrad 50 kämmt, welches drehfest auf einer Motorwelle 52 des Elektromotors 24 angebracht ist. Das Kegelrad 50 und das Tellerrad 48 bilden das Kegelradgetriebe 20.

Das Kugellager 42 der Mutter 30 ist als Sensorlager 42 ausgebildet, mit dem sich die Rotation der Mutter 30 in Bruchteilen einer vollen Umdrehung und die Anzahl voller Umdrehungen sowie vorzugsweise auch die Drehrichtung der Mutter 30 messen läßt. Das Sensorlager 42 für sich ist in Figur 2 in einer Bruchzeichnung vergrößert dargestellt. Zur Ausbildung des Kugellagers 42 als Sensorlager ist ein Innenring 41 des Kugellagers 42 mit einem Impulsring 54 und ein Außenring 43 des Kugellagers 42 mit einem Sensorring 56 versehen. Sensorring 56 und Impulsring 54 sind koaxial zueinander und zum Kugellager 42 an einer Seite des Kugellagers 42 angebracht, der Impulsring 54 ist berührungslos innerhalb des Sensorrings 56 angeordnet. Zur drehfesten Anbringung des innenliegenden Impulsrings 54 am Innenring 41 des Kugellagers 42 weist der Impulsring 54 einen seitlich abstehenden Ringbund 58 auf, mit dem der Impulsring 54 reibschlüssig in den Innenring 41 des Kugellagers 42 eingreift und auf diese Weise drehfest mit dem Innenring 41 des Kugellagers 42 verbunden ist Der Impulsring 54 dreht also mit dem Innenring 41 des Kugellagers 42 und damit mit der Mutter 30 mit. Der außen liegende Sensorring 56 ist in gleicher Weise mit einem seitlich abstehenden Ringbund 61 reibschlüssig am Außenring 43 des Kugellagers 42 angebracht und damit feststehend.

Der Impulsring 54 besteht aus einem metallischen Trägerring und einem Plasto-Ferrit-Ring. Der Plasto-Ferrit-Ring weist eine Permanent-Magnetisierung mit einer Anzahl von Nord- und Südpolen, die einander abwechselnd über den Umfang des Impulsrings 54 verteilt angeordnet sind. Der Sensorring 56 weist mindestens einen, vorzugsweise zwei Hallsensoren 57 mit mehradrigen Meßkabeln 59 auf. Die Hallsensoren 57 mit ihren Meßkabeln 59 sind der Übersichtlichkeit wegen in Figur 1 nicht eingezeichnet. Bei Drehung der Mutter 30 verursacht jeder Magnetpol des mit der Mutter 30 mitdrehenden impulsrings 54 einen Impuls in den Hallsensoren 57 des feststehenden Sensorrings 56, wodurch die Drehung der Mutter 30 meßbar ist. Weist der Sensorring 56 zwei Hallsensoren 57 auf, sind diese in Umfangsrichtung so zueinander versetzt, daß der vom Impulsring 54 induzierte Signalverlauf eine Phasenverschiebung von 90° an den beiden Hallsensoren 57 aufweist, wodurch die Drehrichtung der Mutter 30 ermittelbar ist Wegen ihrer in Umfangsrichtung zueinander versetzten Anordnung ist in Figur 2 lediglich ein Hallsensor 57 sichtbar.

Bei Verwendung von zwei Hallsensoren 57 besteht zudem die Möglichkeit, die Anzahl der Impulse pro Umdrehung zu verdoppeln. Beispielsweise zweimal 64 Impulse pro Umdehung entsprechen 128 Impulse pro Umdrehung. Zählt man die Flanken der Impulse, so kann das Sensorlager 42 eine maximale Genauigkeit von 256 Impulsen pro Umdrehung erreichen. Die gößer Impulszahl pro Umdrehung ergibt ein höhere Regelgüte.

Da die Verschiebung der Reibbremsbeläge 14 in Richtung der Bremsscheibe 16 oder von dieser weg der Drehung der Mutter 30 proportional bzw. die Andruckkraft, mit der die Reibbremsbeläge 14 gegen die Bremsscheibe 16 gedrückt werden, vom Drehweg der Mutter 30 abhängig ist, läßt sich mittels des Sensorlagers 42 der Verschiebeweg der Reibbremsbeläge 40 bzw. ein von ihrer Andruckkraft an die Bremsscheibe 16 abhängiges Maß ermitteln, das zur Steuerung des Elektromotors 24 der erfindungsgemäßen Radbremsvorrichtung 10 dient. Es ist insbesondere vorgesehen, ein Lüftspiel der Reibbremsbeläge 14, also ein Spalt zwischen den Reibbremsbelägen 14 und der Bremsscheibe 16 bei zurückgestellter Reibbremsvorrichtung 10 einzustellen.

Zur Einstellung des Lüftspiels wird die Mutter 30 beim Lösen der Radbremsvorrichtung 10 ab dem Abheben der Reibbremsbeläge 14 von der Bremsscheibe 16 um einen festgelegten und mittels des Sensorlagers 42 gemessenen Drehweg zurückgedreht. Zur Einstellung des Lüftspiels wird vorzugsweise nicht das Abheben der Reibbremsbeläge 14 von der Bremsscheibe 16 ermittelt, sondern das Anlegen der Reibbremsbeläge 14 an die Bremsscheibe 16 beim Zustellen der Reibbremsbeläge 14 nach Überwindung des Lüftspiels. Sobald die Reibbremsbeläge 14 beim Zustellen die Bremsscheibe 16 erreichen, ergibt sich infolge der Andruckkraft der Reibbremsbeläge 14 an die Bremsscheibe 10 ein starker, sprungartiger Anstieg der Stromaufnahme des Elektromotors 24, der einfach zu ermitteln ist. Diese Drehstellung der Mutter 30 dient als Ausgangswert, es wird jede Vor- und Rückdrehung der Mutter 30 während des Bremsens mittels des Sensorlagers 42 ermittelt und beim Lösen der Radbremsvorrichtung 10 nach Beendigung des Bremsvorgangs die Mutter 30 um den vorgesehenen Rückstelldrehweg über die Ausgangsdrehstellung hinaus zurückgedreht, wodurch das gewünschte Lüftspiel eingestellt ist. Das Abheben der Reibbremsbeläge 14 von der Bremsscheibe 16 beim Lösen der Radbremsvorrichtung 10 ist grundsätzlich in entsprechender Weise wie das Anlegen der Reibbremsbeläge 14 an die Bremsscheibe beim Zuspannen der Radbremsvorrichtung 10 über die Stromaufnahme des Elektromotors 24 ermittelbar und kann daher ebenso als Ausgangswert der Drehstellung der Mutter 30 für die Lüftspieleinstellung herangezogen werden, jedoch ist das Abheben der Reibbremsbeläge 14 von der Bremsscheibe 16 weniger exakt bestimmbar.

Da die Andruckkraft der Reibbremsbeläge 14 an die Bremsscheibe 16 abhängig vom Drehweg der Mutter 30 ist, läßt sich das Signal des Sensorlagers 42 auch zur Einstellung einer Bremskraft bzw. eines Bremsmoments der Radbremsvorrichtung 10 in Abhängigkeit von einem Fahrerwunsch, also beispielsweise in Abhängigkeit von einem Weg, um den ein nicht dargestelltes Fußbremspedal niedergetreten oder in Abhängigkeit von einer Kraft, mit der das Fußbremspedal niedergetreten wird, heranziehen.

Anstatt das Lager 42 der Mutter 30 des Rollengewindetriebs 18 als Sensorlager auszubilden kann beispielsweise auch ein Motorlager 60, mit dem die Motorwelle 52 des Elektromotors 24 drehbar gelagert ist, als Sensorlager ausgebildet sein, wie in der gezeichneten Ausbrechung des Elektromotors 24 dargestellt. Da die Drehung der Motorwelle 52 über das Kegelradgetriebe 20 der Drehung der Mutter 30 proportional ist, können die Signale des Motor-Sensorlagers 60 in gleicher Weise zur Steuerung Radbremsvorrichtung 10 und zur Einstellung ihres Lüftspiels herangezogen werden wie die Signale des Sensorlagers 42 der Mutter 30. Dabei ist es abweichend vom dargestellten Ausführungsbeispiel nicht notwendig, zwei Lager als Sensorlager 42, 60 auszubilden, es genügt ein Sensorlager 42 für die Mutter 30 oder ein Sensorlager 60 für die Motorwelle 52.

## Patentansprüche

1. Elektromechanische Radbremsvorrichtung (10) mit einem Elektromotor (24), mit einer Betätigungseinrichtung (18, 20), die mit dem Elektromotor antreibbar ist, und mit einem Reibbremsbelag (14), der von der Betätigungseinrichtung an einen drehfest mit einem Fahrzeugrad verbundenen Bremskörper (16) andrückbar ist, und bei der die Betätigungseinrichtung (18, 20) nach Art eines Schraubgetriebes (18) mit Mutter (30) und Spindel (26) ausgebildet ist und bei der zur Positionierung des Schraubgetriebes (18) ein die Drehbewegung erfassendes Gebermittel vorgesehen ist, **dadurch gekennzeichnet, dass** die Radbremsvorrichtung (10) als Gebermittel ein Sensorlager (42) aufweist, mit dem in der Betätigungseinrichtung (18, 20) die Mutter (30) oder die Spindel drehbar gelagert ist.

2. Radbremsvorrichtung nach Anspruch 1, **dadurch gekennzeichnet, dass** das Sensorlager (42) einen Impulsring (54) mit permanenter Magnetisierung aufweist.

3. Radbremsvorrichtung nach Anspruch 2, **dadurch gekennzeichnet, dass** das Sensorlager (42) einen Hallsensor (57) aufweist.

4. Radbremsvorrichtung nach Anspruch 3, **dadurch gekennzeichnet, dass** das Sensorlager (42) einen zweiten Hallsensor (57) aufweist.

5. Radbremsvorrichtung nach Anspruch 3 oder 4, **dadurch gekennzeichnet, dass** das Sensorlager (42) einen Sensorring (56) mit dem/den Hallsensor/en (57) aufweist.

## Claims

1. Electromechanical wheel brake device (10) having an electric motor (24), having an activation device (18, 20) which can be driven by means of the electric motor, and having a friction brake lining (14) which can be pressed by the activation device against a brake element (16) which is securely connected to a vehicle wheel so as to rotate with it, and in which the activation device (18, 20) is embodied in the manner of a helical gear mechanism (18) with nut (30) and spindle (26), and in which, in order to position the helical gear mechanism (18), a sensor means which senses the rotary movement is provided, **characterized in that** the wheel brake device (10) has, as sensor means, a sensor bearing (42), by means of which the nut (30) or the spindle is rotatably mounted in the activation device (18, 20).

2. Wheel brake device according to Claim 1, **characterized in that** the sensor bearing (42) has a pulse ring (54) with permanent magnetization.

3. Wheel brake device according to Claim 2, **characterized in that** the sensor bearing (42) has a Hall sensor (57).

4. Wheel brake device according to Claim 3, **characterized in that** the sensor bearing (42) has a second Hall sensor (57).

5. Wheel brake device according to Claim 3 or 4, **characterized in that** the sensor bearing (42) has a sensor ring (56) with the Hall sensor or sensors (57).

## Revendications

1. Dispositif de frein de roue électromécanique (10) comportant un moteur électrique (24), une installation d'actionnement (18, 20) entraînée par le moteur électrique et une garniture de frein de friction (14) que l'installation d'actionnement peut presser contre un organe de frein (16) solidaire en rotation de la roue du véhicule, et selon lequel
l'installation d'actionnement (18, 20) est réalisée à la manière d'une transmission à vis (18) avec un écrou (30) et une broche (26) et comporte un transmetteur détectant le mouvement de rotation pour positionner la transmission à vis (18).
**caractérisé en ce que**
le dispositif de frein de roue (10) comporte comme transmetteur un palier capteur (42) par lequel l'écrou (30) ou la broche est monté à rotation dans l'installation d'actionnement (18, 20).

2. Dispositif de frein de roue selon la revendication 1.
**caractérisé en ce que**
le palier capteur (42) comporte une bague à impulsions (54) à aimantation permanente.

3. Dispositif de frein de roue selon la revendication 2,
**caractérisé en ce que**
le palier capteur (42) est un capteur à effet Hall (57),

4. Dispositif de frein de roue selon la revendication 3,
**caractérisé en ce que**
le palier capteur (42) comporte un second capteur à effet Hall (57).

5. Dispositif de frein de roue selon la revendication 3 ou 4.
**caractérisé en ce que**
le palier capteur (42) comporte une bague de capteur (56) avec le ou les capteurs à effet Hall (57).
